**Europäisches Patentamt**

**European Patent Office**

**Office européen des brevets**

(19)

(11) Veröffentlichungsnummer : **0 359 916 B1**

(12) # EUROPÄISCHE PATENTSCHRIFT

(45) Veröffentlichungstag der Patentschrift :
11.11.92 Patentblatt 92/46

(51) Int. Cl.⁵ : **F16D 3/60,** F16D 3/79

(21) Anmeldenummer : **89111524.8**

(22) Anmeldetag : **24.06.89**

(54) **Flexible Ganzstahlwellenkupplung mit gummielastischer Ummantelung.**

(30) Priorität : **16.08.88 DE 3827673**

(43) Veröffentlichungstag der Anmeldung :
**28.03.90 Patentblatt 90/13**

(45) Bekanntmachung des Hinweises auf die
Patenterteilung :
**11.11.92 Patentblatt 92/46**

(84) Benannte Vertragsstaaten :
**AT BE CH DE ES FR GB GR IT LI LU NL SE**

(56) Entgegenhaltungen :
DE-A- 3 437 388
FR-A- 2 409 417
US-A- 4 019 346

(73) Patentinhaber : **ATEC-Weiss GmbH & Co. KG
Von-Siemens-Strasse 1
W-4426 Vreden (DE)**

(72) Erfinder : **Füser, Bernd
Mozartstrasse 17
W-4426 Vreden (DE)**

(74) Vertreter : **Cohausz & Florack Patentanwälte
Postfach 14 01 61 Schumannstrasse 97
W-4000 Düsseldorf 1 (DE)**

## Beschreibung

Die Erfindung betrifft eine flexible Ganzstahlwellenkupplung, deren beide jeweils einen Anschlußflansch aufweisende Kupplungshälften über einen Lamellenpaketkranz drehsteif und axial- und winkelbeweglich miteinander verbunden sind, wobei der Lamellenpaketkranz mittels umfangmäßig verteilt angeordneter Befestigungs- und Spannelemente wechselweise an den beiden Anschlußflanschen befestigt ist und im Bereich außerhalb der Anschlußflächen an die Befestigungs- und Spannelemente (3,4) durch eine gummielastische Verpackung (5,6) ummantelt ist.

Flexible Ganzstahlwellenkupplungen, wie sie z.B. aus der DE-PS 3443485 bekannt sind, werden einzeln oder auch paarweise hintereinander geschaltet zur Übertragung von Drehmomenten eingesetzt. Sie dienen insbesondere zum Betrieb mit hohen Drehzahlen und unter Stoßbelastungen. Dabei bewirken die aus Spannbolzen und Spannbuchsen bestehenden Befestigungs- bzw. Spannelemente einerseits eine absolut spielfreie Befestigung der Lamellenpaketkränze an den Anschlußflanschen und andererseits werden hierdurch Unwuchten verhindert.

Da das Lamellenpaket bei der bekannten Kupplung aus Stahllamellen zusammengesetzt ist, entsteht bei Lamellenreibung oder Lamellenbruch die Gefahr einer Funkenbildung. Dies kann insbesondere beim Einsatz der Kupplungen in der Gaswirtschaft zu unvorhersehbaren Folgen führen. Auch bei Anwendung der Kupplung für andere explosionsgeschützte Anlagen kann daher die Gefahr einer solchen Funkenbildung nicht hingenommen werden.

Eine zur Vermeidung dieses Nachteils bekannte Lösung besteht darin, anstelle der Stahllamellen federelastische eisenfreie Legierungen, beispielsweise Kupfer-Nickel Legierungen, für den Lamellenpaketkranz zu verwenden. Solche Materialien vermeiden zwar weitgehend die Funkenbildung, zeichnen sich aber einerseits durch sehr viel höhere Materialkosten und andererseits durch erschwerte Bearbeitbarkeit des Materials aus.

Eine flexible Ganzsatahlwellenkupplung der eingangs genannten Art ist aud der US 4019346 bekannt. Bei dieser Kupplung ist das Lammellenpaket im Bereich außerhalb seiner Anschlußflächen an die Befestigungs- und Spannelemente durch eine gummielastiche Verpackung ummantelt. Das hierbei verwendete Material ist Polyurethan. Hierdurch ergibt sich eine flexible Ummantelung um das Lamellenpaket, die einerseits die Biegbarkeit der einzelnen Lamellen erhält und andererseits das Lamellenpaket gegen eindringende Medium, beipielsweise Öl, schützt. Um die Reibung der einzelnen Lamellen gegeneinander herabzusetzen ist bei dieser Lösung vorgesehen, daß zwischen den Kontaktflächen jeweils zweier Lamellen ein Schmiermittel eingebracht wird.

Wird eine solche Kupplung bis an ihre Stabilitäts

grenze belastet, so besteht durchaus die Gefahr eines Lamellenbruches. Ein Lamellenbruch führt einerseits zum Ausfall der Kupplung, da die Kräfte nicht mehr übertragen werden können. Eine noch größere Gefahr kann aber darin gesehen werden, daß durch die beim Lamellenbruch entstehende Reibung der Bruchflächen der einzelnen Lamellen aneinander eine Funkenbildung entsteht, die wesentlich folgenträchtiger sein kann als die Funkenbildung aufgrund der Reibung der (funktionsfähigen) Lamellen aneinander. Im Falle eines solchen Lamellenbruches gelangen bei der bekannten Kupplung die Bruchstücke aus dem ummantelten Bereich heraus und können somit ungeschützt aneinander reibend eine Funkenbildung herbeiführen.

Demgemäß liegt der Erfindung die Aufgabe zugrunde, eine flexible Ganzstahlwellenkupplung der eingangs genannten Art zu schaffen, bei der auch im Falle eines Lamellenbruches die Gefahr einer Funkenbildung vermieden wird.

Diese Aufgabe wird erfindungsgemäß dadurch gelöst, daß die Ummantelung durch ein auf das Lamellenpaket aufgebrachtes die Lamellen im Falle eines Lamellenbruches zusammenhaltendes Gewebe gebildet ist.

Erfindungsgemäß werden die im Falle eines Lamellenbruches freigesetzten Bruchstücke der einzelnen Lamellen von dem Gewebe zusammengehalten. Hierdurch wird eine funkenerzeugende Reibung der gebrochenen Lamellenteile aneinander im wesentlichen vermieden. Durch die zusätzlichen isolierenden Eigenschaften der gummielastischen Ummantelung wird die Gefahr einer Funkenbildung weiter herabgesetzt.

Insbesondere ist es von Vorteil, wenn das Gewebe aus zwei Gewebeeinlagen besteht, deren Dehnungsrichtungen mit der Lamellenlängsrichtung jeweils einen spitzen Winkel, insbesondere einen Winkel von 45°, einschließen. Hierdurch wirkt die resultierende elastische Kraft der Gewebeeinlagen in Richtung der Lamelle, wodurch die Verpackung, insbesondere bei Dauerlast, eine hohe Standzeit erhält.

Bei Anwendungen, bei denen es auf eine besonders hohe Festigkeit der Verpackung ankommt, kommt als Gewebe auch ein Stahlgewebe in Betracht.

Als Material für die Verpackung wird ein elastomeres Material, vorzugsweise ein elastomeres Polyurethan, verwendet. Ein solches Material zeichnet sich dadurch aus, daß es einerseits eine hohe Festigkeit und Härte besitzt, andererseits aber auch wärmeleitende Eigenschaften hat. Die Wärmeleitfähigkeit der Verpackung kann dadurch noch weiter verbessert werden, wenn dem Elastomer Ruß beigegeben wird.

Ein Ausführungsbeispiel der Erfindung wird im folgenden anhand einer Zeichnung näher erläutert. Dabei zeigen:

Fig. 1 ausschnittsweise einen Schnitt durch die Kupplung gemäß des Ausführungsbeispiels im Bereich der Befestigungs- und Spannelemente,

Fig. 2a eine Ansicht des Lamellenpakets entlang der in Fig. 1 nur ausschnittsweise gezeigten Linie AA u n d

Fig. 2b einen Schnitt entlang der Linie BB in Fig. 2a.

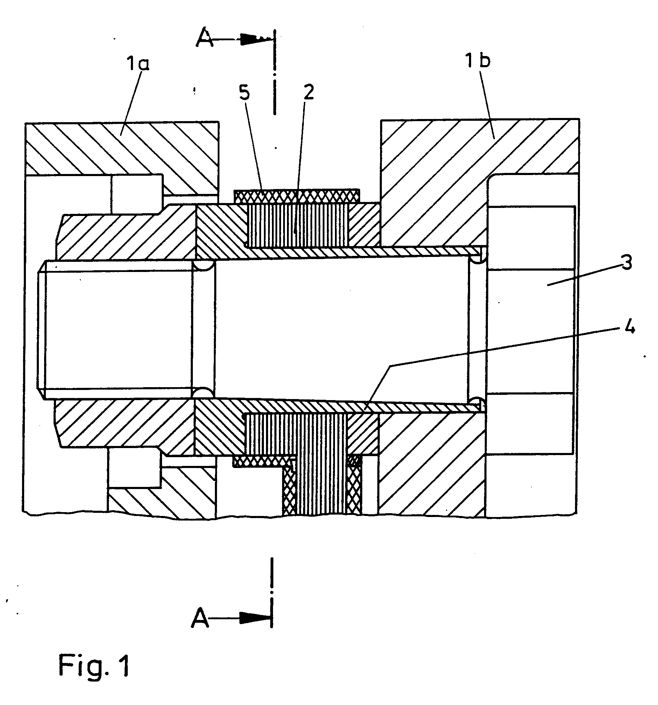

Die in Figur 1 dargestellte Kupplung besteht aus zwei Kupplungshälften, von denen jeweils nur die Anschlußflansche 1a und 1b dargestellt sind. Zwischen den Anschlußflanschen 1a,1b befindet sich mit axialem Abstand ein Lamellenpaket 2, welches sich in Form eines Lamellenpaketkranzes über den gesamten Umfang der Kupplungshälften fortsetzt und wobei der Lamellenpaketkranz durch umfangsmäßig verteilt angeordnete Spannbolzen 3 bzw. Spannbuchsen 4 wechselweise an den beiden Anschlußflanschen 1a,1b befestigt ist.

Dadurch, daß der aus Spannbolzen 3 und Spannbuchsen 4 gebildete Sitz für den Lamellenpaketkranz 2 leicht konisch verläuft, ergibt sich eine spielfreie Halterung des Lamellenpaketes. Bis hierhin ist die beschriebene Kupplung aus der auf die Anmelderin zurückgehenden DE-PS 34 43 485 bekannt.

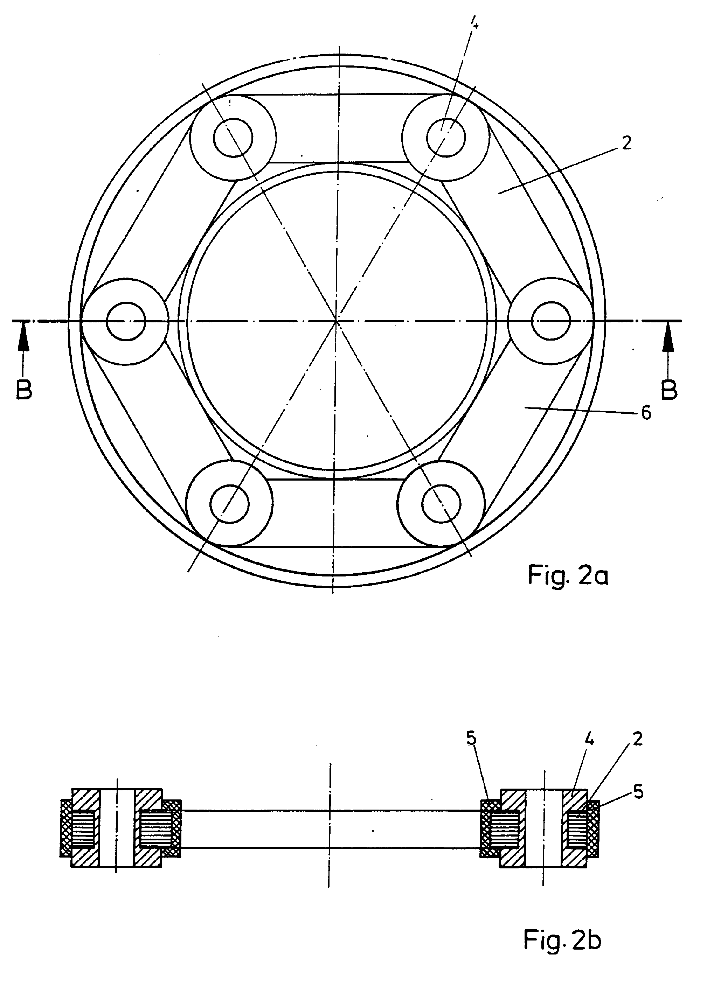

Erfindungsgemäß ist im Bereich der Lamellenpakete 2 eine die Lamellen ummantelnde Verpackung 5 vorgesehen, durch die die Lamellenpakete allseits im Bereich außerhalb der Anschlußflächen an die Spannbuchsen 4 bzw. Spannbolzen 3 gekapselt sind. Wie aus Figur 2b hervorgeht, ist die Höhe der Verpackung 5 geringer als die Höhe der Spannbuchse 4, so daß kein direkter Kontakt zwischen der Verpackung 5 und den Anschlußflanschen 1a bzw. 1b entsteht.

Wie aus Figur 2a erkennbar ist, trägt die Verpackung ein Gewebe 6, welches aus zwei Gewebeeinlagen besteht, deren Dehnungsrichtungen unterschiedlich sind und mit der Längsachse der Lamelle 2 jeweils einen gleichen Winkel von ca. 45° einschließen. Hierdurch wird die Festigkeit der Verpackung verbessert. Als Material für die Verpackung wird bei dem beschriebenen Ausführungsbeispiel der Erfindung elastomeres Polyurethan verwendet, mit welchem die Lamellenpaketkränze im Anschluß an den Zusammenbau der Kupplung umgossen werden. Um zusätzlich eine verbesserte Wärmeleitfähigkeit der Verpackung zu erreichen, enthält das Polyurethan Ruß.

Aufgrund der guten Wärmeleitfähigkeit der Verpackung kann im Inneren des Lamellenpaketkranzes entstehende Reibungswärme nach außen abgeführt werden, so daß die Gefahr für Funkenbildung reduziert ist. Tritt dennoch, beispielsweise bei einem Lamellenbruch ein Funken auf, so wird dieser durch die Ummantelung eingekapselt und kann somit nicht nach außen gelangen.

Daher läßt sich eine mit der erfindungsgemäßen Verpackung ausgestaltete Kupplung vorzugsweise bei der Anwendung für explosionsgefährdete Anlagen einsetzen. Der fertigungstechnische Aufwand für die Herstellung einer solchen Kupplung erhöht sich dabei nur unmerklich.

## Patentansprüche

1. Flexible Ganzstahlwellenkupplung, deren beide jeweils einen Anschlußflansch (1a,1b) aufweisende Kupplungshälften über einen Lamellenpaketkranz (2) drehsteif und axial- und winkelbeweglich miteinander verbunden sind, wobei der Lamellenpaketkranz (2) mittels umfangmäßig verteilt angeordneter Befestigungs- und Spannelemente (3,4) wechselweise an den beiden Anschlußflanschen befestigt ist und im Bereich außerhalb der Anschlußflächen an die Befestigungs- und Spannelemente (3,4) durch eine gummieleastische Verpackung (5,6) ummantelt ist, **dadurch gekennzeichnet,** daß die Ummantelung durch ein auf das Lamellenpaket (2) aufgebrachtes die Lamellen im Falle eines Lamellenbruch.es zusammenhaltende Gewebe (6) gebildet ist.

2. Kupplung nach Anspruch 1, **dadurch gekennzeichnet,** daß das Gewebe (6) aus zwei Gewebeeinlagen besteht, deren Dehnungsrichtungen mit der Lamellenlängsrichtung jeweils den gleichen spitzen Winkel, insbesondere von 45°, einschließen.

3. Kupplung nach Anspruch 1 oder 2, **dadurch gekennzeichnet,** daß das Gewebe (6) ein Stahlgewebe ist.

4. Kupplung nach einem der Ansprüche 1 bis 3, **dadurch gekennzeichnet,** daß die verpackung (5, 6) eine wärmeableitende verpackung ist.

5. Kupplung nach Anspruch 4, **dadurch gekennzeichnet,** daß die verpackung aus einem Elastomer, insbesondere aus einem elastomeren Polyurethan, besteht welches Ruß enthält.

## Claims

1. A flexible all-steel shaft coupling whose two coupling halves, each having a connecting flange 1a, 1b, are interconnected rigid against rotation and axially and angularly movable by a lamella pack ring (2), the lamella pack ring (2) being alternately attached to the two connecting flanges by means of peripherally distributed attaching and clamping elements (3, 4) and being jacketed by a rubber elastic packing (5, 6) in the zone of the connecting surfaces to the fastening and clamping elements (3, 4), characterized in that the jacketing is formed by a fabric (6) which is applied to the lamella pack (2) and which holds the lamellae together in case of a lamella rupture.

2. A coupling according to claim 1, characterized in that the fabric (6) consists of two fabric inserts whose directions of stretching each enclose with the longitudinal direction of the lamellae the same acute angle, more particularly of 45°.

3. A coupling according to claims 1 or 2, characterized in that the fabric (6) is a steel fabric.

4. A coupling according to one of claims 1 to 3, characterized in that the packing (5, 6) is a heat-dissipating packing.

5. A coupling according to claim 4, characterized in that the paeking consists of an elastomer, more particularly an elastomeric polyurethane which contains soot.

**Revendications**

1. Accouplement tout-acier flexible d'arbres, dont les deux demi-accouplements présentant chacun un flasque de raccordement (1a, 1b) sont reliés l'un à l'autre rigidement en rotation et mobiles axialement et angulairement par l'intermédiaire d'une couronne en bloc de lamelles (2), la couronne en bloc de lamelles (2) étant fixée réciproquement aux deux flasques de raccordement au moyen d'éléments de fixation et de tension répartis périphériquement et étant enveloppée par un emballage (5, 6) à élasticité de caoutchouc dans la région à l'extérieur des éléments de fixation et de tension (3, 4),
caractérisé en ce que la gaine est formée par un tissu (6) rapporté sur le bloc de lamelles (2) et maintenant les lamelles ensemble dans le cas d'une rupture de lamelles.

2. Accouplement selon la revendication 1, caractérisé en ce que le tissu (6) est constitué de deux pièces de tissu dont les directions d'allongement forment avec la direction longitudinale des lamelles un angle aigu, en particulier un angle de 45°.

3. Accouplement selon la revendication 1 ou 2, caractérisé en ce que le tissu (6) est un tissu d'acier.

4. Accouplement selon l'une des revendications 1 à 3,
caractérisé en ce que l'emballage (5, 6) est un emballage dissipant la chaleur.

5. Accouplement selon la revendication 4, caractérisé en ce que l'emballage est constitué d'un élastomère, en particulier d'un polyuréthane élastomère, qui contient du noir de carbone.

Fig. 1

Fig. 2a

Fig. 2b